# EUROPÄISCHE PATENTSCHRIFT

(11) **EP 1 002 694 B1**
(45) Veröffentlichungstag und Bekanntmachung des Hinweises auf die Patenterteilung: **20.07.2005**
(21) Anmeldenummer: 99122617.6
(22) Anmeldetag: 13.11.1999
(51) Int. Cl.: B60P 3/20

(54) **Kühlfahrzeug**
Refrigerated vehicle
Véhicule réfrigéré

(30) Priorität: 20.11.1998 DE 29820764 U
(43) Veröffentlichungstag der Anmeldung: 24.05.2000
(73) Patentinhaber: Brandt Kühlfahrzeugbau, 32699 Extertal (DE)
(72) Erfinder: Brandt, Werner, 32699 Extertal-Bösingfeld (DE)
(74) Vertreter: Stracke, Alexander, Dipl.-Ing.

(56) Entgegenhaltungen:
- EP-A- 0 123 508
- EP-A- 0 364 198
- DE-U- 9 410 286
- DE-U- 29 604 366
- GB-A- 772 723
- US-A- 2 459 022
- US-A- 5 161 848
- US-A- 5 704 676
- PATENT ABSTRACTS OF JAPAN vol. 1998, no. 01, 30. Januar 1998 (1998-01-30) & JP 09 254704 A (NIPPON FRUEHAUF CO LTD), 30. September 1997 (1997-09-30)

## Beschreibung

Die Erfindung betrifft ein Kühlfahrzeug mit einem kofferartigen Aufbau, der durch wenigstens eine Trennwand in einzelne Kühlkammern unterteilt ist, wobei jede Trennwand aus wenigstens zwei aneinandergereihten, schwenkbaren Einzelwandelementen gebildet ist, die in Eckbereichen in Profilschienen verriegelbar, jedoch entriegelbar und schwenkbar gelagert sind.

Das in Rede stehende Kühlfahrzeug ist in der Normalausführung mit zwei Trennwänden und demzufolge mit drei Kühlkammern ausgestattet. In die einzelnen Kühlkammern werden hintereinander die zur Auslieferung anstehenden Lebensmittel auf Rollwagen oder Paletten gelagert. Da beispielsweise Gefriergut und auch frische Ware, wie zum Beispiel Frischfleisch, gleichzeitig transportiert werden müssen, sind entsprechende Temperaturen in den einzelnen Kühlkammern notwendig. Die Breiten der Kühlkammern sind an die Breite eines Rollwagens oder einer Palette angepasst. Nun kann es passieren, dass beispielsweise bei einer Rückfahrt andere Waren, Leergut oder dass ausschließlich Fleisch oder Fleischprodukte transportiert werden müssen. In diesem Falle sind die Trennwände äußerst störend, wobei es sogar passieren kann, dass bestimmte Güter nicht transportiert werden können.

Aus der US 2 459 022 A ist ein Aufbau eines Fahrzeugs bekannt, der aus zwei Kammern besteht und von denen eine Kammer als Kühlkammer ausgebildet ist und der eine weitere Kammer aufweist, die belüftet werden kann. Die Trennung erfolgt durch eine Doppeltür, wobei jedes Türelement aus zwei schwenkbaren Türflügeln besteht. Diese Doppeltür verläuft quer zu den Seitenwänden des Aufbaues und die Türelemente sind mittels Scharniere an den Fahrzeugwänden angeschlagen.

Aus der gattungsgemäßen GB 772 723 A ist ein Fahrzeugaufbau bekannt, welcher durch zwei zweiflügelige Türen in drei Kammern unterteil ist. Die Türen stehen ebenfalls quer zu den Seitenwänden des Aufbaues und die Türflügel sind mittels Scharniere an den Seitenwänden angeschlagen. Die einzelnen Kammern können auch als Kühlkammern genutzt werden.

Bei den zuvor beschriebenen Fahrzeugaufbauten lässt sich der Gesamtraum in einzelne Kammern unterteilen, jedoch ist der Zugang zu der mittleren und zu den dem Führerhaus zugewandten Kammern nur durch die jeweils davor liegende Kammer notwendig. Bei diesen Ausführungen kann der Fahrzeugaufbau auch in seiner Gesamtheit genutzt werden, doch sind diese Aufbauten für die Auslieferung von Kühlgut oder auch ungekühltem Gut nicht geeignet, da, wie bereits ausgerührt, die kommissionierte Ware auf Rollwagen oder Paletten gelagert wird.

Der Erfindung liegt die Aufgabe zugrunde, ein Kühlfahrzeug der eingangs näher beschriebenen Art in konstruktiv einfacher Weise so zu gestalten, dass im Bedarfsfall jede Trennwand quer zur Fahrzeuglängsrichtung geschwenkt werden kann, um entweder die Anzahl der Kühlkammern zu verringern, oder um den Innenraum in seiner Gesamtheit als Ladevolumen benutzen zu können.

Die gestellte Aufgabe wird gelöst, indem die eine Trennwand bildenden Einzelwandelemente in Längsrichtung des kofferartigen Aufbaus verlaufen, dass die Eckbereiche jedes Einzelwandelementes in im Abstand zum Dach des Aufbaus liegende Profilschienen sowie im Boden des Aufbaus derart lösbar verriegelt sind, dass jedes Einzelwandelement durch Lösen der Verriegelung eines Eckbereiches um die Verriegelung des anderen Eckbereiches vertikal schwenkbar ist.

Bei dem in Rede stehenden Kühlfahrzeug ist es nicht möglich, die Trennwand in seiner Gesamtheit quer zu verschieben. Dies ist nicht nur auf die Länge zurückzuführen, sondern auch darauf, dass die Trennwand vom Fahrer allein verschoben werden müsste. Außerdem kann die Schiebetrennwand aufgrund der Schienen in der Decke des Aufbaus nicht quer verschoben werden. Durch die nunmehr vorgeschlagene Unterteilung der Trennwand in zwei oder mehr Einzelwandelemente können diese nacheinander geschwenkt werden, da jedes Einzelwandelement drehbar ist. Dazu sind beispielsweise in den Eckbereichen Schlösser mit Bolzen vorgesehen, die in Lochschienen eingreifen, die im Boden des kofferartigen Aufbaus und im oberen Dachbereich fest angeordnet sind und sich in Längsrichtung erstrecken. Durch die Entriegelbarkeit ist es nunmehr möglich, zunächst die der hinteren Kante der Trennwand zugeordneten Lagerbolzen zu entriegeln. Die gegenüberliegenden Lagerbolzen bilden dann eine Schwenkachse, so dass zunächst das Einzelwandelement in Richtung zur zugehörigen Seitenwand des kofferartigen Aufbaus geschwenkt werden kann, und zwar solange, bis die hintere Kante an die Innenfläche der Seitenwand schlägt. Die Lagerbolzen werden dann in Lochschienen eingeführt. Anschließend werden die gegenüberliegenden Lagerbolzen entriegelt, so dass dann dieses Einzelwandelement um die hinteren Lagerbolzen geschwenkt werden kann, so dass es dann an der Innenwand anliegt. Das Entriegeln und Schwenken der restlichen Einzelwandelemente erfolgt in gleicher Weise. Da jedoch das Schwenken der Einzelwandelemente auf einem Kreisbogen erfolgt, der durch die Länge des Einzelwandelementes bestimmt ist, verschiebt sich die Trennwand in der Richtung, wie die Einzelwandelemente geschwenkt werden, das heißt, wenn zunächst das hintere Einzelwandelement von der normalen Stellung als erstes an die Seitenwand gebracht wird und dann das nächstfolgende Einzelwandelement bzw. das vordere, verschiebt sich die Trennwand insgesamt nach vorn bzw. zum Führerhaus.

Die Verschiebung ist möglich, da die vorderen oder hinteren Randbereiche jeder Trennwand als um vertikale Achsen drehbare Schwenkelemente ausgebildet sind, wobei jedes Schwenkelement aus einer Profilschiene gebildet ist, die schwenkbar mit dem zugehörigen Rand eines plattenförmigen Einzelwandelementes gekoppelt ist. Verschiebt sich beispielsweise die Trennwand nach vom, wird in diesem Falle der vordere Rand der Trennwand geschwenkt. Würde als erstes das vordere Einzelwandelement an die Seitenwand gebracht, müsste der hintere Randbereich schwenkbar sein. Auch könnten diese Schwenkelemente als Adapter an den Türen fest montiert werden, da Längentoleranzen der Ladung dies zulassen. Das Überführen der Einzelwandelemente von den Seitenwänden des kofferartigen Aufbaus in die normale Betriebsstellung zur Unterteilung des Innenraumes erfolgt in der umgekehrten Reihenfolge. Üblicherweise ist jeder kofferartige Aufbau durch zwei Trennwände in drei Kühlkammern unterteilt. In diesem Falle könnte der Aufbau nicht nur in drei Kühlkammern, sondern auch in Kühlkammern unterschiedlicher Größe oder in eine Kammer unterteilt werden. Das Verfahren der Einzelwandelemente von den seitlichen in die mittlere Betriebsstellung erfolgt in der umgekehrten Reihenfolge.

Eine konstruktiv einfache Lösung wird durch die Ausbildung jedes Schwenkelementes aus einer Profilschiene erreicht, die schwenkbar mit dem Rand des zugehörigen plattenförmigen Einzelwandelementes gekoppelt ist. Diese Koppelung lässt sich in einfachster Weise konstruktiv umsetzen, wenn auf den Rand des der Vorderwand oder der hinteren Klappe des Aufbaus zugeordneten Einzelwandelementes eine gelenkig mit der Profilschiene gekoppelte Halteprofilleiste aufgesetzt ist. Die Profilschiene und die Halteprofilleiste können so gestaltet sein, dass sie mittels eines Bolzens gelenkig miteinander verbunden sind. Die einzelnen Kammern werden im Normalfall mit unterschiedlichen Temperaturen betrieben. Damit zwischen dem schwenkbaren Rand des plattenförmigen Einzelwandelementes und der vorderen Wand des Aufbaus kein Spalt entsteht, ist vorgesehen, dass der freie Rand der schwenkbaren Profilschiene einen sich über die gesamte Höhe erstreckenden, elastischen Dichtstreifen trägt. Ferner sind ebenfalls elastische Dichtstreifen an den oberen, unteren und hinteren Rändern sowie im Stoßbereich der Einzelwandelemente vorgesehen. In der normalen, den Aufbau unterteilenden Stellung wird der Dichtstreifen verformt, so dass durch die Rückstellkräfte eine optimale Dichtwirkung erzielt wird. Außerdem lassen sich durch den Dichtstreifen Toleranzen ausgleichen. In vorteilhafter Weise ist der Dichtstreifen als Hohlprofilstreifen gebildet und mit einem Befestigungsfuß versehen, der Randbereiche eines in der Profilschiene vorgesehenen Schlitzes hintergreift. Da der Dichtstreifen aus einem Hohlprofil besteht, kann dieser besonders stark verformt werden, so dass selbst bei relativ großen Toleranzen die Dichtwirkung erzielt wird. Durch den Befestigungsfuß entfallen zusätzliche Befestigungselemente. Die Dichtwirkung wird noch zusätzlich erhöht, wenn am freien, der schwenkbaren Profilschiene abgewandten Seite des Dichtstreifens wenigstens eine Dichtlippe angeformt ist. Dadurch werden je nach Anzahl der Dichtlippen entsprechende Berührungsflächen zwischen dem Aufbau und dem Dichtstreifen erreicht.

Anhand der beiliegenden Zeichnungen wird die Erfindung noch näher erläutert.

Es zeigen:
- Figur 1: einen Aufbau eines Kühlfahrzeuges mit zwei Trennwänden in der normalen Betriebsstellung in einem Horizontalschnitt, rein schematisch;
- Figur 2: eine der Figur 1 entsprechende Darstellung, jedoch die Verfahrbarkeit einer Trennwand darstellend;
- Figur 3: den Aufbau nach den Figuren 1 und 2, bei der jedoch die beiden Trennwände an die Seitenwände des Aufbaus gebracht sind;
- Figur 4: das der Vorderwand zugeordnete Ende des Einzelwandelementes in der normalen Betriebsstellung der Zwischenwand und
- Figur 5: das der Vorderwand des Aufbau zugeordnete Ende eines Einzelwandelementes, wenn sich die Trennwand entsprechend der Figur 3 an der Seitenwand des Aufbaus befindet.
- Figur 6: eine der Figur 2 entsprechende Seitenansicht
- Figur 7: sieben verschiedene Möglichkeiten der Unterteilung des Aufbaues eines Kühlfahrzeuges.

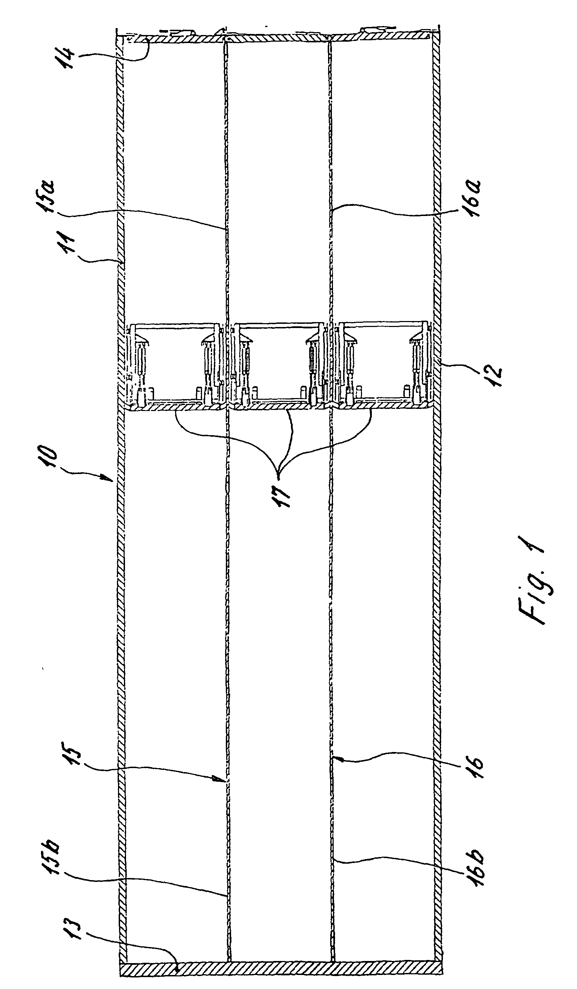

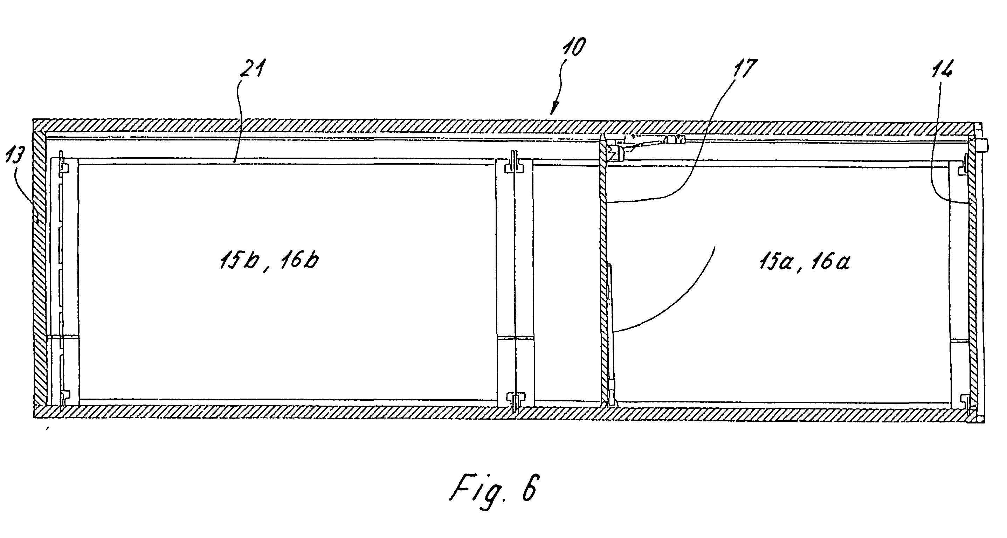

Der in den Figuren 1 bis 3 rein schematisch dargestellte Aufbau 10 eines Kühlfahrzeuges besteht aus den beiden Seitenwänden 11, 12, der dem Führerhaus des Kühlfahrzeuges zugeordnete Vorderwand 13 und einer Heckklappe 14. Der Innenraum des Aufbaues 10 ist im dargestellten Ausführungsbeispiel durch zwei Trennwände 15, 16 in drei Kammern mit gleicher Breite unterteilt. In nicht dargestellter Weise können durch ein oder mehrere Kühlaggregate die Temperaturen in den Kammern unterschiedlich sein. Damit der nicht genutzte, leere Teil jeder Kammer nicht durch die Kühlluft beaufschlagt wird, ist in jeder Kammer jeweils ein Schiebeelement 17 vorgesehen, welches entsprechend der Figur 6 unter die Decke des Aufbaus geschwenkt werden kann, um beispielsweise die Kammern zu beladen oder zu entladen oder um die Trennwände 15, 16 an die Seitenwände anzuordnen. Im dargestellten Ausfuhrungsbeispiel steht jede Trennwand 15, 16 aus plattenförmigen Einzelwandelementen 15a, 15b, 16a und 16b. Die Einzelwandelemente 15a, 15b, 16a, 16b sind im dargestellten Ausführungsbeispiel gleich lang. In nicht näher dargestellter Weise sind die Einzelwandelemente 15a, 15b, 16a, 16b mit ihren Eckbereichen in Lochschienen oder dergleichen verriegelt, die unterhalb der Decke des Aufbaus und im Boden angeordnet sind. Die Lochschienen werden allgemein als Sturz bezeichnet. Die Verriegelung kann jedoch aufgehoben werden, um jedes Einzelwandelement 15a, 15b, 16a, 16b von der normalen, den Aufbau in Kammern unterteilenden Betnebsstellung in eine Nichtgebrauchsstellung zu bewegen, in der sie an den Innenflächen der Seitenwände 11, 12 anliegen.

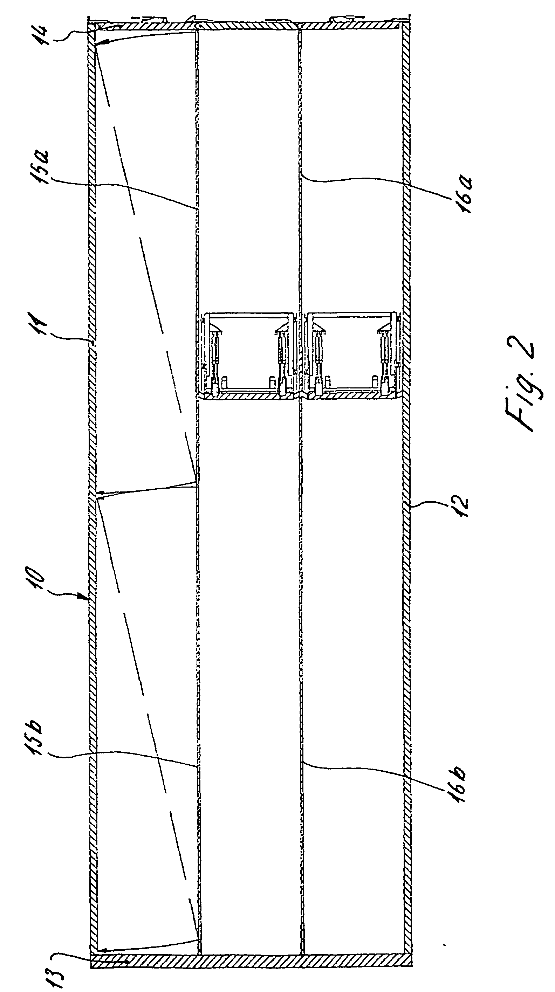

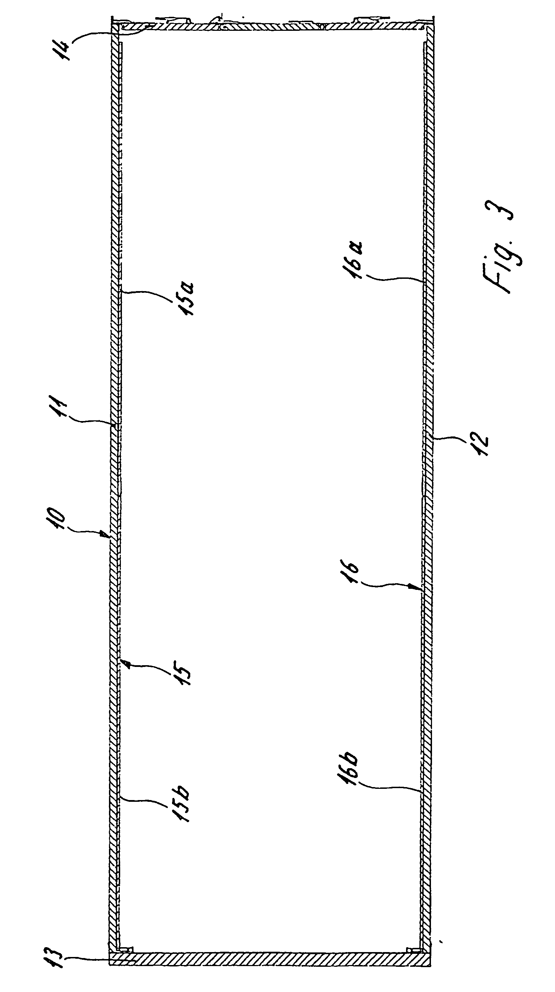

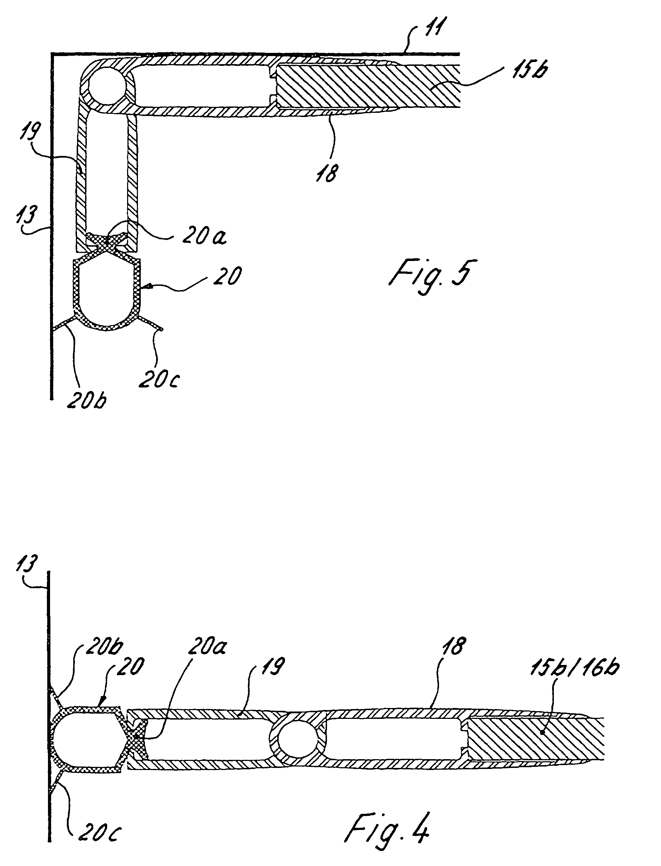

In der Figur 2 ist angedeutet, wie die die Trennwand 15 bildenden Einzelwandelement 15a und 15b verschoben werden, um an der Innenfläche der rechten Seitenwand 11 des Aufbaus 10 anzuliegen. Dazu wird zunächst die obere und untere Verriegelung an der hinteren, der Heckklappe 14 zugewandten Kante gelöst. Das Einzelwandelement 15a ist dann um die mittlere Verriegelung schwenkbar. Nachdem die hintere Kante an der Innenfläche der rechten Seitenwand 11 anliegt, wird die Entriegelung wieder verriegelt. Das Einzelwandelement 15a kann dann um diese Verriegelung geschwenkt werden, so daß es entsprechend der Figur 3 an der Innenfläche der Seitenwand 11 anliegt. Anschließend wird das der Vorderwand 13 zugeordnete Einzelwandelement 15b in gleicher Weise zweimal geschwenkt. Sofern notwendig, können dann die die Trennwand 16 bildenden Einzelwandelemente 16a und 16b in gleicher Weise ebenfalls durch zweimaliges Schwenken an die linke Seitenwand 12 anliegend angeordnet werden. Diese Stellung ist in der Figur 3 dargestellt. Die Bewegungsfolge der Einzelwandelemente 15a, 15b, 16a, 16b vor Bewegung von den Seitenwänden 11, 12 in die normale Betnebsstellung erfolgt in umgekehrter Reihenfolge. Die Figur 2 zeigt, daß sich jedes Einzelwandelement 15a, 15b, 16a, 16b beim Schwenken in Richtung zur Vorderwand 13 verschiebt. Damit jedoch keine Spalten zur Vorderwand 13 entstehen, ist der der Vorderwand 13 zugeordnete Randbereich jeder Trennwand 15, 16 um eine vertikale Achse um einen Winkel schwenkbar, der ca. 90° beträgt. In der normalen Betriebsstellung stehen die der Vorderwand 13 zugeordneten Stirnkanten der beiden Einzelwandelemente 15b, 16b im Abstand zur Vorderwand 13. Figur 4 zeigt die in der Figur 1 dargestellte normale Betriebsstellung, während die Figur 5 die in der Figur 3 dargestellte Außerbetriebsstellung der beiden Trennwände 15, 16 zeigt. Auf die der Vorderwand 13 zugeordneten Ränder der Einzelwandelemente 15b, 16b ist eine Halteprofilleiste 18 aufgesetzt. Mit dieser Halteprofilleiste 18 ist gelenkartig oder scharnierartig eine Profilschiene 19 verbunden, die entsprechend der Darstellung nach der Figur 5 um 90° geschwenkt wird, wenn das Einzelwandelement 15b, 16b gegen die Seitenwand 12 bewegt wird. An der der Vorderwand 13 zugewandten Seite ist die Profilschiene 19 mit einem Schlitz versehen. Dadurch ist es möglich, in die Profilschiene 19 einen Dichtstreifen 20 einzusetzen. Im dargestellten Ausführungsbeispiel ist der Dichtstreifen 20 ein Hohlprofilstreifen, der mit einem Befestigungsfuß 20a versehen ist, der die den Schlitz der Profilschiene 19 begrenzenden Ränder hintergreift. An der den Befestigungsfuß 20 abgewandten Seite ist der Dichtstreifen 20 mit zwei Dichtlippen 20b und 20c versehen, die schräg zur mittleren Symmetrieachse des Dichtstreifens 20 stehen. Dadurch wird in der Betnebsstellung der beiden Trennwände 15, 16 eine optimale Dichtwirkung zwischen den einzelnen Kammern erreicht. Wenn die Trennwände 15, 16 an die Seitenwände 11, 12 gefahren werden, liegt noch eine der Dichtlippen 20b oder 20c an der Vorderwand an. Der Dichtstreifen 20 ist aus einem flexiblen Material, vorzugsweise aus Gummi oder einem gummiähnlichen Kunststoff gefertigt. Die Halteprofilleiste 18 und die Profilschiene 19 könnte aus einem formstabilen Kunststoff, beispielsweise durch Extrusion hergestellt werden. Die gelenk- oder scharnierartige Verbindung könnte mittels eines durchgehenden Bolzens erfolgen.

In Umkehrung der beschriebenen Ausführung könnten auch zunächst die der Vorderwand 13 zugeordneten Einzelwandelemente 15b und 16b zweimal geschwenkt werden, so daß dann die schwenkbare Profilschiene 19 am hinteren, der Heckklappe 14 zugeordneten Rand angeordnet werden müßten.

Die Figur 6 zeigt den Aufbau gemäß der Figur 2 in einer Seitenansicht. Daraus ergibt sich, daß die Einzelwandelemente (15a, 15b,16a, 16b) in Profilschienen (21) sowie im Boden des Aufbaues lösbar verriegelt sind. Die oberen Profilschienen (21) liegen in einem Abstand zum Dach bzw. zum oberen Boden des Ausbaues, damit die Schiebeelemente (17) in den Zwischenraum eingeklappt werden können. Außerdem ergibt sich ein ausreichender Raum für die Verdampfer der Kuhlmaschine, die benachbart der Vorderwand (13) im oberen Bereich oberhalb der Profilschienen (21) montiert sind. Dadurch können die Einzelwandelemente (15a, 15b, 16a, 16b) ungehindert bzw. frei bewegt werden.

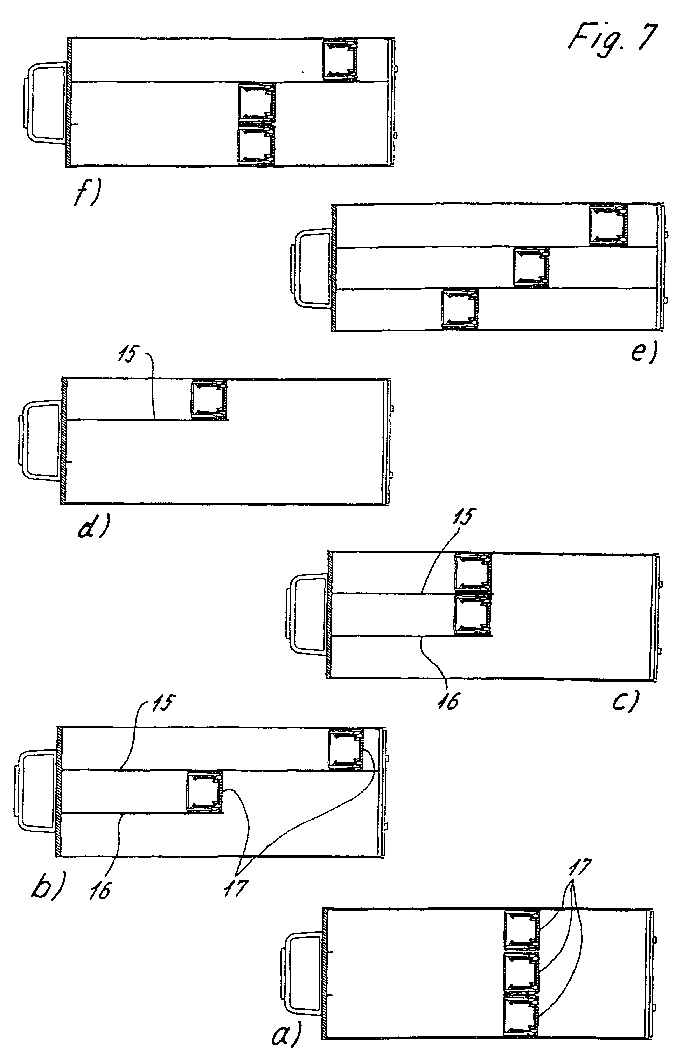

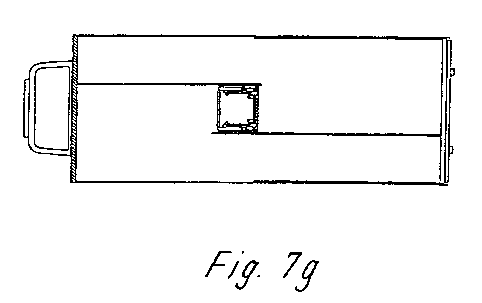

Die Figur 7 zeigt in den Einzeldarstellungen 7a bis 7g sieben verschiedene Möglichkeiten der Unterteilung des Laderaumes eines Kühlfahrzeuges. Bei der Ausführung nach der Einzeldarstellung 7a sind die beiden Trennwände (15, 16) an die Seitenwände geschoben Die Schiebeelemente (17) stehen in gleichen Abständen zu der Vorderwand (13), so daß ein Kühl- oder Gefrierraum und ein ungekühlter Raum entsteht. Bei der Ausführung nach der Einzeldarstellung 7b ist das der Heckklappe zugeordnete Einzelwandelement (16a) an die Seitenwand verschoben. Das linke Schiebeelement (17) ist unter die Decke geklappt, während das mittlere Schiebeelement etwa in der Mitte der mittleren Kammer steht. Dadurch wird das Volumen der linken Kammer um 50 % größer. Das Schiebeelement (17) der rechten Kammer steht nahe der Heckklappe, so daß diese gesamte Kammer gekühlt wird. Im Zuge der Entladung dieser Kammer wird das Schiebeelement (17) dann entsprechend verfahren. Die Einzeldarstellung 7c zeigt, daß auch das der rechten Wand zugeordnete, hintere Einzelelement (15a) an die zugehörige Seitenwand gefahren werden kann, so daß die Schiebeelemente der rechten und der mittleren Kammer im mittleren Bereich stehen. Dadurch wird das Ladevolumen der linken Kammer verdoppelt. Dieses Ladevolumen läßt sich noch weiter vergrößeren, indem das vordere, der Vorderwand (13) zugeordnete Einzelwandelement (16b) ebenfalls an die Seitenwand verfahren wird. Das Schiebeelement (17) der mittleren Kammer wird dann hochgeklappt, so daß das Ladevolumen der linken Kammer um das 2,5fache erhöht wird. Die Einzeldarstellung 7e zeigt, daß der Aufbau in drei gleiche Kammern unterteilt ist, indem die Trennwände (15, 16) in der jeweiligen, den Aufbau teilenden Positionen stehen. Die Größe dieser Kammern werden durch die verschiedenen Stellungen der Schiebeelemente (17) bestimmt. Die Einzeldarstellung 7f zeigt, daß die linke Trennwand (16) an die zugehörige Seitenwand verfahren wurde, so daß die linke Kammer insgesamt doppelt so groß ist wie die rechte Kammer. Dieses Volumen kann wiederum durch die beiden Schiebewände (17) reduziert werden. Die Einzeldarstellung 7g zeigt eine besonders vorteilhafte Aufteilung des Laderaumes. Dazu ist ein vorderes Einzelelement 15b der Trennwand 15 in die normale Position gebracht. Das hintere Trennwandelement 16a der Trennwand 16 steht ebenfalls in der normalen Position. Die an den einander zugewandten Enden der Einzelwandelemente entstehende Öffnung ist durch ein Schiebeelement verschlossen. Die entstehenden Kammern sind gleich bzw. annähernd gleich groß, bedingt durch den Versatz der beiden Einzelwandelemente 15b und 16a. Die Grundflächen der beiden Kammern sind demzufolge gleich oder ähnlich, jedoch um 180° zueinander gedreht. Im Gegensatz zur gezeichneten Ausführungen nach der Einzeldarstellung 7g könnte jedoch auch das Einzelwandelement 16b in der normalen vorderen Stellung und das hintere Einzelwandelement 15 a in der normalen hinteren Stellung stehen. Die dargestellten Stellungen sind beispielhaft zu sehen. Im Bedarfsfalle ist es auch möglich, daß die Einzelwandelemente fest innerhalb des Laderaumes angeordnet werden, wobei die Schiebeewände jedoch beweglich sein sollten, um die Kammern zu vergrößern oder zu verkleinern und um sie zugänglich zu machen.

Es ergibt sich aus der Figur 7, daß in besonders vorteilhafter Weise durch die Trennwände (15, 16) der Aufbau des Kühlfahrzeuges optimal unterteilt werden kann, so daß die zu kühlenden Kammern so klein wie möglich gehalten werden können.

Die Erfindung ist nicht auf die darstellten Ausführungsbeispiele beschränkt. Wesentlich ist die Unterteilung der Trennwände (15, 16) in Einzelwandelemente (15a, 15b, 16a, 16b) und die verschiedenen Größen der zu kühlenden Kammern.

## Patentansprüche

1. Kühlfahrzeug mit einem kofferartigen Aufbau, der durch wenigstens eine Trennwand (15, 16) in einzelne Kühlkammern unterteilt ist, wobei jede Trennwand (15, 16) aus wenigstens zwei aneinandergereihten, schwenkbaren Einzelwandelementen (15a, 15b, 16a, 16b) gebildet ist, die in Eckbereichen in Profilschienen (21) verriegelbar, jedoch entriegelbar und schwenkbar gelagert sind, **dadurch gekennzeichnet, dass** die eine Trennwand (15, 16) bildenden Einzelwandelemente (15a, 15b, 16a, 16b) in Längsrichtung des kofferartigen Aufbaus verlaufen, dass die Eckbereiche jedes Einzelwandelementes (15a, 15b, 16a, 16b) in im Abstand zum Dach des Aufbaus liegende Profilschienen (21) sowie im Boden des Aufbaus derart lösbar verriegelt sind, dass jedes Einzelwandelement (15a, 15b, 16a, 16b) durch Lösen der Verriegelung eines Eckbereiches um die Verriegelung des anderen Eckbereiches vertikal schwenkbar ist.

2. Kühlfahrzeug nach Anspruch 1, **dadurch gekennzeichnet, dass** die vorderen oder hinteren Randbereiche jeder Trennwand (15, 16) als um vertikale Achsen drehbare Schwenkelemente ausgebildet sind, wobei jedes Schwenkelement aus einer Profilschiene (19) gebildet ist, die schwenkbar mit dem zugehörigen Rand eines plattenförmigen Einzelwandelementes (15a, 15b, 16a, 16b) gekoppelt ist.

3. Kühlfahrzeug nach Anspruch 2, **dadurch gekennzeichnet, dass** auf jeden Rand jedes Einzelwandelementes (15a, 15b, 16a, 16b) eine gelenkig mit der Profilschiene (19) gekoppelte Halteprofilleiste (18) aufgesetzt ist.

4. Kühlfahrzeug nach Anspruch 2 oder 3, **dadurch gekennzeichnet, dass** der freie Rand der schwenkbaren Profilschiene (19) einen sich über die gesamte Höhe oder annähernd über die gesamte Höhe erstreckenden, elastischen Dichtstreifen (20) trägt.

5. Kühlfahrzeug nach einem oder mehreren der vorhergehenden Ansprüche 1 bis 4, **dadurch gekennzeichnet, dass** an den oberen, unteren, vorderen und hinteren Rändern sowie in den Stoßbereichen der Einzelwandelemente (15a, 15b, 16a, 16b) elastische Dichtstreifen vorgesehen sind.

6. Kühlfahrzeug nach Anspruch 4 oder 5, **dadurch gekennzeichnet, dass** jeder Dichtstreifen (20) als Hohlprofilstreifen ausgebildet ist und einen Befestigungsfuß (20a) aufweist, der die einen Schlitz in der Profilschiene (19) begrenzenden Randbereich hintergreift.

7. Kühlfahrzeug nach Anspruch 5 oder 6, **dadurch gekennzeichnet, dass** am freien, der schwenkbaren Profilschiene (19) abgewandten Seite des Dichtstreifens (20) wenigstens eine Dichtlippe (20b, 20c) angeformt ist.

## Claims

1. Refrigerated vehicle having a box-like body which is divided into individual refrigerated chambers by at least one partition (15, 16), each partition (15, 16) being formed from at least two pivotable individual wall elements (15a, 15b, 16a, 16b) which are arranged in a row and are mounted in a manner such that they can be locked in corner regions in profiled rails (21), but also can be unlocked and pivoted, **characterized in that** the individual wall elements (15a, 15b, 16a, 16b) forming a partition (15, 16) run in the longitudinal direction of the box-like body, **in that** the corner regions of each individual wall element (15a, 15b, 16a, 16b) are locked releasably in profiled rails, which are situated at a distance from the roof of the body, and in the floor of the body in such a manner that each individual wall element (15a, 15b, 16a, 16b), by release of the lock in a corner region, can be pivoted vertically about the lock of the other corner region.

2. Refrigerated vehicle according to Claim 1, **characterized in that** the front or rear edge regions of each partition (15, 16) are designed as pivoting elements which can be rotated about vertical axes, each pivoting element being formed from a profiled rail (19) which is coupled pivotably to the associated edge of a plate-like individual wall element (15a, 15b, 16a, 16b).

3. Refrigerated vehicle according to Claim 2, **characterized in that** a retaining profiled strip (18) which is coupled in an articulated manner to the profiled rail (19) is placed onto each edge of each individual wall element (15a, 15b, 16a, 16b).

4. Refrigerated vehicle according to Claim 2 or 3, **characterized in that** the free edge of the pivotable profiled rail (19) bears an elastic sealing strip (20) which extends over the entire height or approximately over the entire height.

5. Refrigerated vehicle according to one or more of the preceding Claims 1 to 4, **characterized in that** elastic sealing strips are provided on the upper, lower, front and rear edges and in the abutting regions of the individual wall elements (15a, 15b, 16a, 16b).

6. Refrigerated vehicle according to Claim 4 or 5, **characterized in that** each sealing strip (20) is designed as a hollow profiled strip and has a fastening foot (20a) which reaches behind the edge region bounding a slot in the profiled rail (19).

7. Refrigerated vehicle according to Claim 5 or 6, **characterized in that** at least one sealing lip (20b, 20c) is integrally formed on the free side of the sealing strip (20) that faces away from the pivotable profiled rail (19).

## Revendications

1. Véhicule réfrigérant comprenant une carrosserie en forme de coffre, qui est subdivisée par au moins une cloison de séparation (15, 16) en chambres réfrigérantes individuelles, chaque cloison de séparation (15, 16) étant formée d'au moins deux éléments de cloison individuelle (15a, 15b, 16a, 16b) placés en série et basculants, qui sont logés dans des zones d'angle dans des barres profilées (21) de façon à pouvoir être verrouillés, mais également déverrouillés et basculés, **caractérisé en ce que** les éléments de cloison individuelle (15a, 15b, 16a, 16b) formant une cloison de séparation (15, 16) sont agencés dans la direction longitudinale de la carrosserie en forme de coffre, **en ce que** les zones d'angle de chaque élément de cloison individuelle (15a, 15b, 16a, 16b) sont verrouillées de façon détachable dans des barres profilées (21) situées à distance du toit de la carrosserie et dans le fond de la carrosserie de telle sorte que chaque élément de cloison individuelle (15a, 15b, 16a, 16b) peut basculer verticalement autour du verrouillage de l'autre zone d'angle par détachement du verrouillage d'une zone d'angle.

2. Véhicule réfrigérant selon la revendication 1, **caractérisé en ce que** les zones périphériques avant ou arrière de chaque cloison de séparation (15, 16) sont conçues comme des éléments basculants pouvant tourner autour d'axes verticaux, chaque élément basculant étant formé d'une barre profilée (19), qui est couplée de façon basculante avec le bord correspondant d'un élément de cloison individuelle (15a, 15b, 16a, 16b) en forme de plaque.

3. Véhicule réfrigérant selon la revendication 2, **caractérisé en ce qu'**une baguette profilée de retenue (18) couplée de façon articulée avec la barre profilée (19) est posée sur chaque bord de chaque élément de cloison individuelle (15a, 15b, 16a, 16b).

4. Véhicule réfrigérant selon la revendication 2 ou 3, **caractérisé en ce que** le bord libre de la barre profilée (19) basculante porte une bande d'étanchéité (20) élastique et s'étendant sur l'ensemble de la hauteur ou approximativement sur l'ensemble de la hauteur.

5. Véhicule réfrigérant selon l'une quelconque ou plusieurs des revendications 1 à 4 précédentes, **caractérisé en ce que** des bandes étanches élastiques sont prévues sur les bords supérieurs, inférieurs, avant et arrière ainsi que dans les zones de jonction des éléments de cloison individuelle (15a, 15b, 16a, 16b).

6. Véhicule réfrigérant selon la revendication 4 ou 5, **caractérisé en ce que** chaque bande d'étanchéité (20) est conçue comme une bande en profilé creux et présente une base de fixation (20a), qui saisit par l'arrière la zone périphérique délimitant une fente dans la barre profilée (19).

7. Véhicule réfrigérant selon la revendication 5 ou 6, **caractérisé en ce qu'**au moins une lèvre d'étanchéité (20b, 20c) est formée sur le côté, libre et opposé à la barre profilée (19) basculante, de la bande d'étanchéité (20).
